# EUROPEAN PATENT APPLICATION

(11) **EP 2 728 703 A2**
(43) Date of publication of application: **07.05.2014**
(21) Application number: 13189870.2
(22) Date of filing: 23.10.2013
(51) Int. Cl.: H02J 7/00

(54) **Initial starting apparatus and method for vehicle**

(30) Priority: 30.10.2012 KR 20120121616
(71) Applicant: LSIS Co., Ltd., Dongan-gu, Anyang-si Gyeonggi-do 431-080 (KR)
(72) Inventor: Lee, Se Hyung, 431-080 Anyang-si, Gyeonggi-do (KR); Jun, Bum Su, 431-080 Anyang-si, Gyeonggi-do (KR); Kim, Ung Hoe, 431-080 Anyang-si, Gyeonggi-do (KR); Kim, Hyoung Taek, 431-080 Anyang-si, Gyeonggi-do (KR); Kim, Young Min, 431-080 Anyang-si, Gyeonggi-do (KR)
(74) Representative: Lang, Johannes

(57) **Abstract**

An initial starting apparatus and method for a vehicle are provided. The initial starting apparatus includes: a converter (120) configured to identify remaining energy of an energy storage (130) or a battery (150) during a wakeup mode; a controller (110) configured to control the wakeup mode of the converter and control energy to be applied from at least one of the energy storage and the battery to a starter motor (160) in accordance with the remaining energies of the energy storage and the battery; the energy storage configured to apply energy to the starter motor under the control of the controller; the battery; and the starter motor configured to be driven by being supplied with energy by at least one of the energy storage and the battery.

## Description

### CROSS-REFERENCE TO RELATED APPLICATION(S)

This application claims priority under 35 U.S.C. § 119 from Korean Patent Application No. 10-2007-0038396, filed on April 19, 2007, in the Korean Intellectual Property Office, the disclosure of which is incorporated herein by reference in its entirety.

### BACKGROUND

### 1. Field

Embodiments relate to an initial starting apparatus and method for a vehicle.

### 2. Description of the Related Art

Due to the rapidly increasing oil prices and taxes, automobiles with maximized fuel efficiency, such as those equipped with an Idle Stop & Go (ISG) system, have been developed.

Unlike a typical starter motor for a vehicle, a side starter generator (SSG) of an ISG system, which is a starter-alternator hybrid motor, serves as an alternator when an engine operates. An ISG system may be classified into an integrated type with an alternator and a starter incorporated thereinto and a separate type with an alternator and a starter provided therein separately.

An ISG system can provide high fuel efficiency by turning off the engine of a vehicle when the vehicle is not driven and allowing the vehicle to be started with simple manipulation.

However, in a vehicle to which an ISG system is applied, a starter motor consumes a high current when the vehicle is started. However, if the starter motor instantaneously consumes more energy than a permissible amount of energy, the starter motor may be dropped. In addition, the vehicle may not be started due to the driver's mistake or a dead or weak battery from a long term of no use.

That is, a vehicle is started by a starter motor using the energy from a battery. However, if due to, for example, a long term of no use of the vehicle, the battery is dead or there is no sufficient energy left for the starter motor to be driven, the vehicle cannot be started.

### SUMMARY

In one embodiment, an initial starting apparatus for a vehicle includes: a converter configured to identify remaining energy of an energy storage or a battery during a wakeup mode; a controller configured to control the wakeup mode of the converter and control energy to be applied from at least one of the energy storage and the battery to a starter motor in accordance with the remaining energies of the energy storage and the battery; the energy storage configured to apply energy to the starter motor under the control of the controller; the battery; and the starter motor configured to be driven by being supplied with energy by at least one of the energy storage and the battery.

### BRIEF DESCRIPTION OF THE DRAWINGS

The above and/or other aspects will be more apparent by describing certain exemplary embodiments with reference to the accompanying drawings, in which:

FIG. 1 is a block diagram illustrating the flow of energy in an oscillating unit of a vehicle including an Ideal Stop & Go (ISG) system, according to an embodiment;

FIG. 2 is a flowchart illustrating an initial driving operation of a vehicle, according to an embodiment;

FIG. 3 is a block diagram illustrating the flow of energy in an oscillating unit of a vehicle including an ISG system, according to another embodiment;

FIG. 4 is a flowchart illustrating an initial driving operation of a vehicle, according to another embodiment;

FIG. 5 is a block diagram illustrating the flow of energy in an oscillating unit of a vehicle including an ISG system, according to another embodiment; and

FIG. 6 is a flowchart illustrating an initial driving operation of a vehicle, according to another embodiment.

### DETAILED DESCRIPTION OF THE EXEMPLARY EMBODIMENTS

Following description exemplifies only the principles of the present invention. Even if they are not described or illustrated clearly in the present specification, one of ordinary skill in the art can embody the principles of the present invention and invent various apparatuses within the concept and scope of the present invention. The conditional terms and embodiments presented in the present specification are intended only to make understood the concept of the present invention, and they are not limited to the embodiments and conditions mentioned in the specification.

In addition, all the detailed description on the principles, viewpoints and embodiments and particular embodiments of the present invention should be understood to include structural and functional equivalents to them. The equivalents include not only the currently known equivalents but also those to be developed in future, that is, all devices invented to perform the same function, regardless of their structures.

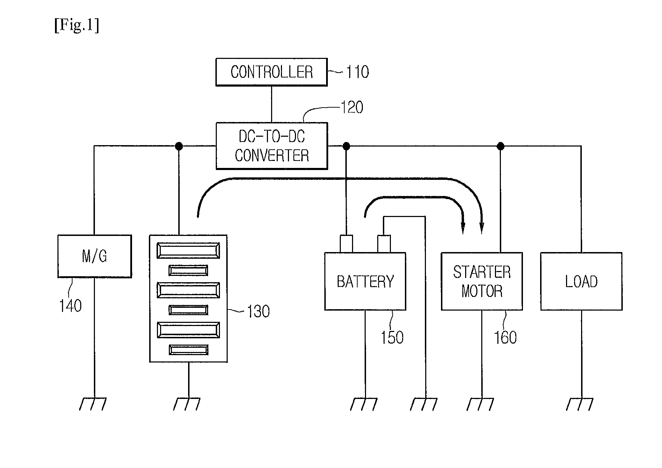

FIG. 1 is a block diagram illustrating the flow of energy in an oscillating unit of a vehicle including an Ideal Stop & Go (ISG) system, according to an embodiment.

Referring to FIG. 1, the oscillating unit may include a controller 110, a direct current (DC)-to-DC converter 120, an energy storage 130, a motor/generator 140, a battery 150, and a starter motor 160.

The controller 110 may determine whether the DC-to-DC converter 120 is in a sleep mode and identify the period at which to wake up the DC-to-DC converter 120. When the DC-to-DC converter 120 operates in the sleep mode due to, for example, a long term of no use of the vehicle, the controller 110 may identify a predetermined wakeup period for the DC-to-DC converter 120, and may output a wakeup control signal to the DC-to-DC converter 120 upon the arrival of the predetermined wakeup period.

Once the DC-to-DC converter 120 is woken up, the controller 110 may obtain state of charge (SOC) information of the energy storage 130 and the battery 150 from the DC-to-DC converter 120.

The controller 110 may control a critical amount of energy in the battery 150 to be transferred to the energy storage 130 with reference to the SOC information.

Then, the controller 110 may control the starter motor 160 to be started with the remaining energy in the energy storage 130 and the battery 150, respectively.

The DC-to-DC converter 120 may be woken up from the sleep mode at regular intervals of time in response to the receipt of a control signal from the controller 110. The DC-to-DC converter 120 may be woken up at regular intervals of time, and may then determine the remaining energies of the energy storage 130 and the battery 150 and output SOC information obtained by the determination to the controller 110.

Various types of devices for storing and supplying energy, such as an ultracapacitor, an absorbent glass mat (AGM) battery, a Pb battery or a lithium battery, may be used as the energy storage 130. The energy storage 130 may store energy generated or recovered by the motor/generator 140, and may supply energy for the driving of an ISG function. The energy storage 130 may be charged with the critical amount of energy from the battery 150. The energy with which the energy storage 130 is charged may be transmitted to the starter motor 160 so as to start the starter motor 160.

The motor/generator 140 may execute an ISG mode by driving a motor engine, such as an alternator (AT) or a Side Starter Generator (SSG), with the energy present in the energy storage 130.

The battery 150 may supply energy for driving the starter motor 160 for an initial start of the vehicle. The battery 150 may transmit the critical amount of energy to the energy storage 130 in accordance with monitoring result data from the DC-to-DC converter 120.

The starter motor 160 may be driven with the energy from the battery 150 for an initial start of the vehicle. The starter motor 160 may also be driven with a combined energy obtained by combining the remaining energies of the battery 150 and the energy storage 130.

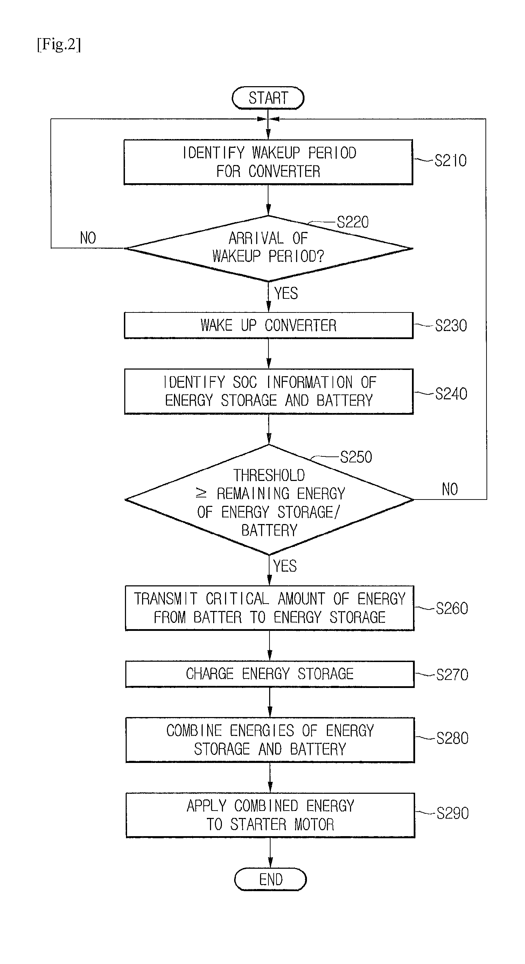

An initial driving operation of a vehicle, according to an embodiment will hereinafter be described with reference to FIGS. 1 and 2.

FIG. 2 is a flowchart illustrating an initial driving operation of a vehicle, according to an embodiment.

Referring to FIG. 2, when the vehicle is not in use for a long time, the controller 110 determines whether the DC-to-DC converter 120 is in a sleep mode and identifies a wakeup period for the DC-to-DC converter 120 (S210).

The controller 110 determines whether the wakeup period has arrived (S220).

In response to a determination being made that the wakeup period has arrived, the controller 110 wakes up the DC-to-DC converter 120 from the sleep mode (S230).

The controller 110 obtains SOC information of the energy storage 130 and the battery 150 from the DC-to-DC converter 120 (S240).

The controller 110 determines whether the remaining energies of the energy storage 130 and the battery 150 are lower a predetermined threshold based on the obtained SOC information (S250). The predetermined threshold may indicate a minimum amount of energy required to drive the motor/generator 140 or the starter motor 160.

In response to a determination being made that the remaining energies of the energy storage 130 and the battery 150 are lower than the predetermined threshold, the controller 110 controls a critical amount of energy to be transmitted from the battery 150 to the energy storage 130 (S260).

The critical amount of energy may account for a predetermined percentage of the remaining energy of the battery 150. For example, the critical amount of energy may be set to, but is not limited to, 5% of the remaining energy of the battery 150. The critical amount of energy may vary depending on the amount of energy required for an initial start of the vehicle.

The storage capacity of the energy storage 130 is less than the storage capacity of the battery 150. In addition, since the energy storage 130 has excellent current discharge capability as compared to the battery 150, the energy storage 130 can output a current with a high magnitude even at a low voltage. Accordingly, the energy storage 130 may outperform the battery 150 in terms of the magnitude of a current that can be output with any given output energy.

The controller 110 controls the energy storage 130 to be charged with the critical amount of energy from the battery 150 (S270).

In response to the charging of the energy storage 130 being complete, the controller 110 obtains a combined energy by combining the remaining energies of the energy storage 130 and the battery 150 (S280).

The controller 110 applies the combined energy to the starter motor 160 so that the starter motor 160 can be started upon an initial driving request.

According to the embodiments of FIGS. 1 and 2, when the vehicle cannot be started because of, for example, a dead battery from a long term of no use of the vehicle, a combined energy obtained by combining the remaining energies of the energy storage 130 and the battery 150 is applied to the starter motor 160 to start the vehicle.

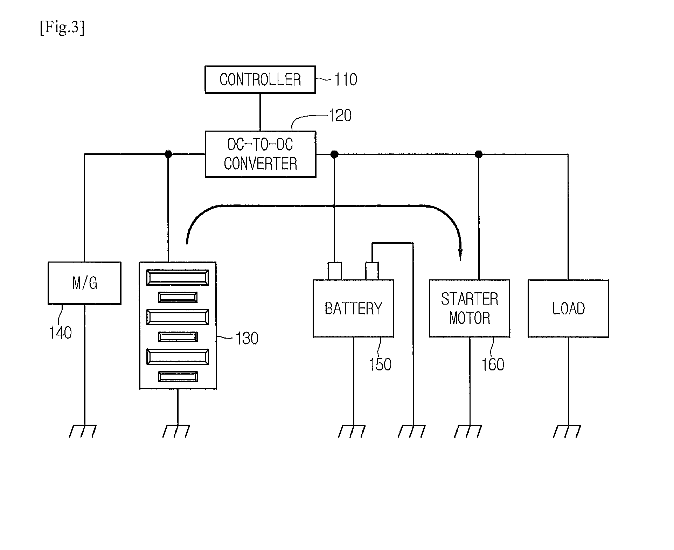

FIG. 3 is a block diagram illustrating the flow of energy in an oscillating unit of a vehicle including an ISG system, according to another embodiment.

The structure of the oscillating unit illustrated in FIG. 3 is similar to the structure of the oscillating unit illustrated in FIG. 1.

Referring to FIG. 3, a controller 110 may determine whether a DC-to-DC converter 120 is in a sleep mode and identify the period at which to wake up the DC-to-DC converter 120. When the DC-to-DC converter 120 operates in the sleep mode due to, for example, a long term of no use of the vehicle, the controller 110 may identify a predetermined wakeup period for the DC-to-DC converter 120, and may output a wakeup control signal to the DC-to-DC converter 120 upon the arrival of the predetermined wakeup period.

Once the DC-to-DC converter 120 is woken up, the controller 110 may obtain SOC information of an energy storage 130 and a battery 150 from the DC-to-DC converter 120.

The controller 110 may control a starter motor 160 to be driven with the remaining energy of the energy storage 130 if the remaining energy of the battery 150 is not sufficient to drive the start motor 160.

The DC-to-DC converter 10 may be woken up from the sleep mode at regular intervals of time in response to the receipt of a control signal from the controller 110. The DC-to-DC converter 120 may be woken up at regular intervals of time, and may then determine the remaining energies of the energy storage 130 and the battery 150 and output SOC information obtained by the determination to the controller 110.

Various types of devices for storing and supplying energy, such as an ultracapacitor, an AGM battery, a Pb battery or a lithium battery, may be used as the energy storage 130. The energy storage 130 may store energy generated or recovered by the motor/generator 140, and may supply energy for the driving of an ISG function. The energy storage 130 may also supply energy for starting the starter motor 160.

The motor/generator 140 may execute an ISG mode by driving a motor engine, such as an AT or a SSG, with the energy present in the energy storage 130.

The battery 150 may supply energy for driving the starter motor 160 for an initial start of the vehicle.

The starter motor 160 may start the vehicle with the energy from the battery 150. The starter motor 160 may also start the vehicle with the energy from the energy storage 130.

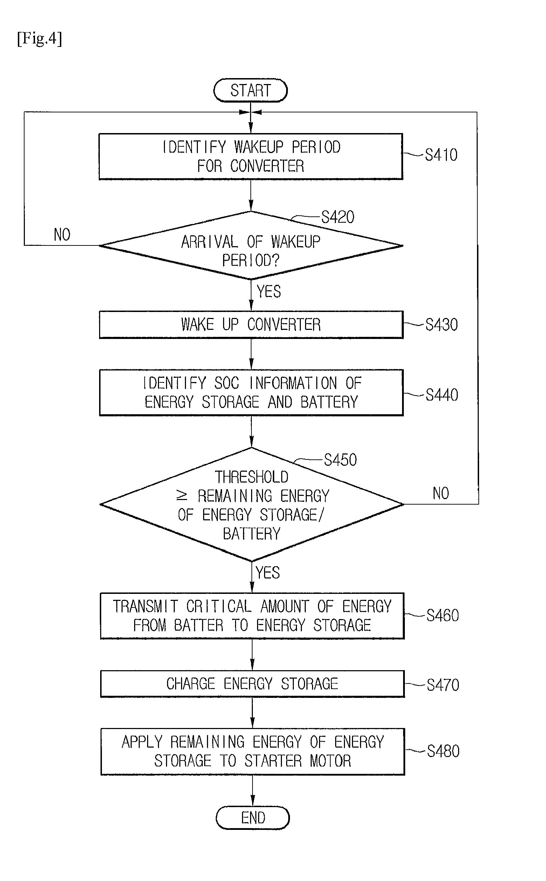

An initial driving operation of a vehicle, according to another embodiment will hereinafter be described with reference to FIGS. 3 and 4.

FIG. 4 is a flowchart illustrating an initial driving operation of a vehicle, according to another embodiment.

Referring to FIG. 4, the controller 110 determines whether the DC-to-DC converter 120 is in a sleep mode and identifies a wakeup period for the DC-to-DC converter 120 (S410).

The controller 110 determines whether the wakeup period has arrived (S420). In response to a determination being made that the wakeup period has arrived, the controller 110 switches the DC-to-DC converter 120 from the sleep mode to a wakeup mode (S430).

The controller 110 identifies the remaining energies of the energy storage 130 and the battery 150 from the DC-to-DC converter 120 (S440), and determines whether the remaining energies of the energy storage 130 and the battery 150 are lower a predetermined threshold (S450).

In response to a determination being made that the remaining energy of the battery 150 is lower than the predetermined threshold, the controller 110 controls a critical amount of energy in the battery 150 to be transmitted to the energy storage 130 (S460).

The controller 110 controls the energy storage 130 to be charged with the critical amount of energy from the battery 150 (S470).

In response to the remaining energy of the energy storage 130 being lower than the predetermined threshold, the controller 110 controls the remaining energy of the energy storage 130 to be applied to the starter motor 160 (S480).

Since the energy storage 130 has excellent current discharge capability as compared to the battery 150, the energy storage 130 can output a current with a high magnitude even at a low voltage. Accordingly, the energy storage 130 can provide a higher energy output than the battery 150 by using only a small portion of the energy of the battery 150. Therefore, the starter motor 160 can be started with the energy from the energy storage 130.

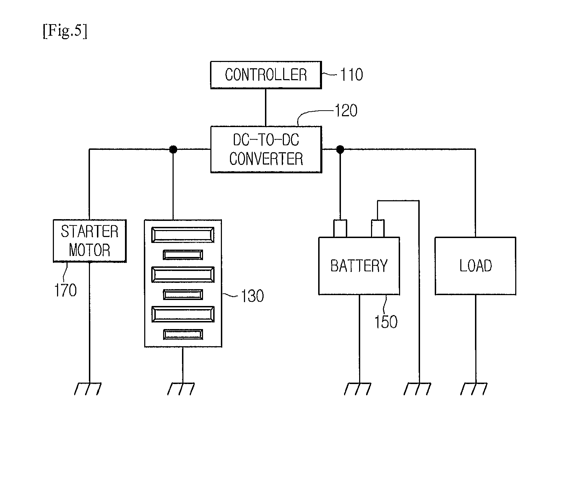

FIG. 5 is a block diagram illustrating the flow of energy in an oscillating unit of a vehicle including an ISG system, according to another embodiment.

Referring to FIG. 5, the oscillating unit may include a controller 110, a direct current (DC)-to-DC converter 120, an energy storage 130, a starter motor 170, and a battery 150.

The controller 110 may determine whether the DC-to-DC converter 120 is in a sleep mode and identify the period at which to wake up the DC-to-DC converter 120. When the DC-to-DC converter 120 operates in the sleep mode due to, for example, a long term of no use of the vehicle, the controller 110 may identify a predetermined wakeup period for the DC-to-DC converter 120, and may output a wakeup control signal to the DC-to-DC converter 120 upon the arrival of the predetermined wakeup period.

Once the DC-to-DC converter 120 is woken up, the controller 110 may obtain SOC information of the energy storage 130 and the battery 150 from the DC-to-DC converter 120.

The controller 110 may control a critical amount of energy in the battery 150 to be transferred to the energy storage 130 with reference to the SOC information.

The controller 110 may control energy to be supplied from the energy storage 130 to the starter motor 170.

The DC-to-DC converter 120 may be woken up from the sleep mode at regular intervals of time in response to the receipt of a control signal from the controller 110. The DC-to-DC converter 120 may be woken up at regular intervals of time, and may then determine the remaining energies of the energy storage 130 and the battery 150 and output SOC information obtained by the determination to the controller 110.

Various types of devices for storing and supplying energy, such as an ultracapacitor, an AGM battery, a Pb battery or a lithium battery, may be used as the energy storage 130. The energy storage 130 may store energy generated or recovered by the starter motor 170, and may supply energy for the driving of an ISG function of the starter motor 170.

The starter motor 170 may execute an ISG mode by using the energy present in the energy storage 130 for driving a motor engine, such as an AT or a SSG. The starter motor 170 may start the vehicle with the remaining energy of the battery 150.

The battery 150 may supply the starter motor 170 with energy for an initial start of the vehicle. The battery 150 may transmit the critical amount of energy to the energy storage 130 in accordance with monitoring result data from the DC-to-DC converter 120.

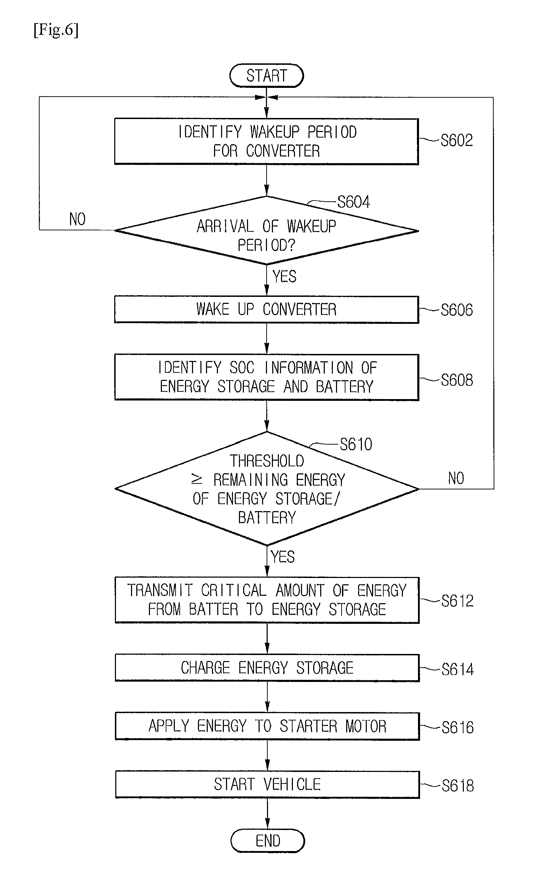

An initial driving operation of a vehicle, according to another embodiment will hereinafter be described with reference to FIGS. 5 and 6.

FIG. 6 is a flowchart illustrating an initial driving operation of a vehicle, according to another embodiment.

Referring to FIG. 6, the controller 110 determines whether the DC-to-DC converter 120 is in a sleep mode and identifies a wakeup period for the DC-to-DC converter 120 (S602).

The controller 110 determines whether the wakeup period has arrived (S604).

In response to a determination being made that the wakeup period has arrived, the controller 110 wakes up the DC-to-DC converter 120 from the sleep mode (S606).

The controller 110 obtains SOC information of the energy storage 130 and the battery 150 from the DC-to-DC converter 120 (S608).

The controller 110 determines whether the remaining energies of the energy storage 130 and the battery 150 are lower a predetermined threshold based on the obtained SOC information (S610). The predetermined threshold may indicate a minimum amount of energy required to drive the starter motor 170.

In response to a determination being made that the remaining energies of the energy storage 130 and the battery 150 are lower than the predetermined threshold, the controller 110 controls a critical amount of energy to be transmitted from the battery 150 to the energy storage 130 (S612).

The critical amount of energy may account for a predetermined percentage of the remaining energy of the battery 150. The critical amount of energy may vary depending on the amount of energy required for an initial start of the vehicle.

Since the storage capacity of the energy storage 130 is less than the storage capacity of the battery 150 and can output a current with a high magnitude even at a low voltage due to its excellent current discharge capability, only a portion of the remaining battery 150 is transmitted to the energy storage 130. Accordingly, the energy storage 130 can provide a higher energy output than the battery 150 by using only a small portion of the energy of the battery 150.

The controller 110 controls the energy storage 130 to be charged with the critical amount of energy from the battery 150 (S614).

In response to the charging of the energy storage 130 being complete, the controller 110 applies the energy in the energy storage 130 (S616).

The controller 110 generates a control signal for an initial start of the vehicle and controls the vehicle to be started (S618).

According to the embodiments of FIGS. 5 and 6, when the vehicle cannot be started because of, for example, a dead battery from a long term of no use of the vehicle, a critical amount of energy can be transmitted from the battery 150 to the energy storage 130, and the energy that the energy storage 130 is charged with can be applied to the starter motor 170 so that the vehicle can be started.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An initial starting apparatus for a vehicle, comprising:
a converter configured to identify remaining energy of an energy storage or a battery during a wakeup mode;
a controller configured to control the wakeup mode of the converter and control energy to be applied from at least one of the energy storage and the battery to a starter motor in accordance with the remaining energies of the energy storage and the battery;
the energy storage configured to apply energy to the starter motor under the control of the controller;
the battery; and
the starter motor configured to be driven by being supplied with energy by at least one of the energy storage and the battery.

2. The initial starting apparatus of claim 1, wherein the controller is further configured to switch the converter from a sleep mode to the wakeup mode at intervals of a predetermined period in response to the converter continuing to operate in the sleep mode for a predetermined amount of time.

3. The initial starting apparatus of claim 2, wherein the controller is further configured to identify the remaining energies of the energy storage and the battery in response to the converter being switched from the sleep mode to the wakeup mode.

4. The initial starting apparatus of claim 1, wherein the controller is further configured to control a combined energy obtained by combining the energies from the energy storage and the battery to be applied to the starter motor.

5. The initial starting apparatus of claim 4, wherein the energy storage is further configured to be supplied and charged with a critical amount of energy applied thereto by the battery in accordance with the identified remaining energies and then supply energy to the starter motor.

6. The initial starting apparatus of claim 5, wherein the controller is further configured to transmit a critical amount of energy from the battery to the energy storage in response to the remaining energy of the battery being lower than a predetermined threshold.

7. The initial starting apparatus of claim 1, wherein the controller is further configured to apply energy from the energy storage to the starter motor in accordance with the remaining energies of the energy storage and the battery.

8. An initial starting method for a vehicle, comprising:
identifying remaining energy of an energy storage or a battery during a wakeup mode;
transmitting energy from the battery to the energy storage in response to the remaining energy of the energy storage or the battery being lower than a predetermined threshold;
charging the energy storage with the transmitted energy; and
supplying the energy that the energy storage is charged with to a motor.

9. The initial starting method of claim 8, wherein the identifying comprise:
determining whether a converter is in a sleep mode and identifying a wakeup period for the converter;
determining whether the wakeup period has arrived; and
identifying the remaining energy of the energy storage or the battery in response to the converter being woken up.

10. The initial starting method of claim 8, wherein the predetermined threshold is a minimum amount of energy required to start the vehicle.
